## Europäisches Patentamt
## European Patent Office
## Office européen des brevets

(11) Publication number: **0 051 849**
**B2**

# (12) NEW EUROPEAN PATENT SPECIFICATION

(45) Date of publication of the new patent specification: **25.04.90**

(21) Application number: **81109491.1**

(22) Date of filing: **03.11.81**

(51) Int. Cl.⁵: **B 60 Q 1/00, B 60 R 16/00**

(54) Multiplexed wiring for vehicles.

(30) Priority: **10.11.80 JP 157016/80**

(43) Date of publication of application:
**19.05.82 Bulletin 82/20**

(45) Publication of the grant of the patent:
**27.02.85 Bulletin 85/09**

(45) Mention of the opposition decision:
**25.04.90 Bulletin 90/17**

(84) Designated Contracting States:
**DE FR GB IT**

(56) References cited:
**DE-A-2 724 759**
**DE-A-2 732 626**
**FR-A-2 035 435**
**FR-A-2 474 189**
**US-A-3 648 057**

**SAE-paper No 760181 (1976), "Time Shared Multiplexing System Applied to Motor Vehicles"**

(73) Proprietor: **Hitachi, Ltd.**
**5-1, Marunouchi 1-chome**
**Chiyoda-ku Tokyo 100 (JP)**

(72) Inventor: **Hasegawa, Akira**
**2-11-12, Matsudocho**
**Katsuta-shi (JP)**
Inventor: **Shibata, Takanori**
**2311-15, Onumacho**
**Hitachi-shi (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

EP 0 051 849 B2

Courier Press, Leamington Spa, England.

## Description

This invention relates to a multiplexed wiring for vehicles and more particularly to a multiplexed wiring of the kind referred to in the pre-characterizing portion of patent claim 1. Such a wiring is known from the article of L. J. Nevett: "Time-Shared Multiplexing System Applied to Motor Vehicles" in SAE-Paper No. 760181.

Recently, an electronic control in vehicles such as automobiles has been developed remarkably and a computer control has been adopted to control various electrical devices equipped to an automobile in a time division mode by means of a microcomputer. Such a system is disclosed in Patent US-A-3,648,057 issued March 7, 1972 and entitled "Vehicular Plex-path Circumferential Control and Distribution System". In the system of this type, signals from electrical devices such as various switches operated by the driver and sensors are encoded and supplied, in a time division multiplex mode, to a central processing unit (CPU) such as a microcomputer, and the CPU processes these signals and generates instruction codes for selected ones of electrical devices such as various control units and indication units in a time division mode. The instruction codes are then decoded and applied, in the time division multiplex mode, to driver circuit elements for driving the selected electrical devices thereby to actuate these electrical devices in accordance with the instruction codes. Thus, various electrical devices for generating sensing signals or control signals on the one hand must be connected to the CPU through control circuit elements adapted to encode the generated signals, and electrical devices driven by these signals on the other hand must be connected electrically to a power source through the driver circuit elements controlled by control signals resulting from decoding the signals from the CPU. As the electronic control in vehicles is greatly developed, the number of electrical devices equipped to an automobile is increased to, for example, several hundreds. Since the electrical devices are located at different portions of the automobile, the wiring or wire harness required for connecting the respective electrical devices to the CPU through the control circuit elements or to the power source through the driver circuit elements becomes very complicated.

A multiplexed wiring for a vehicle in which various electrical devices located at different portions of a vehicle are controlled by a central processing unit through control or driven circuit elements associated with corresponding electrical devices is disclosed in patent FR-A-24 74 189. In the system of this type, use is made of connectors provided for at least one electrical device and connected closely thereto. Each connector includes a housing and a terminal controller having control or driven circuit elements associated with the electrical devices and integrally mounted in the housing. However, an example of the construction of a connector is not disclosed.

On the other hand, it will be impossible to enjoy the advantages of the multiplexed wiring, unless the connections between the electric devices and the circuit elements such as signal receiving/sending circuits, are made reliably and compactly.

In addition to these features, the construction of the connectors should help to simplify the assembling of the wiring device of the vehicle and should also provide easy access to check points.

A wiring as disclosed in the above mentioned SAE-Paper is a wiring for use with a vehicle to establish multiplex communication between a central processing unit and various electrical devices located at different portions of the vehicle through control or driver circuit elements respectively associated with the said electrical devices, comprising a signal transmission path comprising electrical conductors and optical fibers for transmission of signals, in a multiplex mode, to be sent from or applied to the central processing unit, a power transmission path for transmission of power to be fed from a power source wherein said signal transmission path and said power transmission path are included within a main cable and connecting means lodged in housings for connecting the several electrical devices to the signal transmission path and to the power transmission path through the respective control or driver circuit elements.

It is the object of the present invention to provide a wiring with connectors of an improved compact design.

This object is achieved with a wiring as claimed in claim 1.

Dependent claims 2 and 3 are directed on features of preferred embodiments of the invention as claimed in claim 1.

The present invention will be well understood from the following description of its embodiments with reference to the accompanying drawings in which:

Fig. 1 is a schematic diagram showing the overall arrangement of a multiplexed wiring for vehicles;

Fig. 2 is a circuit diagram showing in part the connection in the multiplexed wiring as shown in Fig. 1;

Fig. 3 is a longitudinal sectional view showing the internal construction of a connector in Fig. 2;

Fig. 4 is a sectional view along the line IV-IV in Fig 3.

Fig. 5 is a sectional view along the line V-V in Fig. 3 for showing a ceramic base plate 14 and a terminal control circuit 16:

Fig. 6 is an enlarged fragmentary longitudinal sectional view showing a connecting structure of the terminal control circuit 16 and an optical fiber 20 in Fig. 2; and

Fig. 7 is a longitudinal sectional view showing the internal construction of another embodiment of a connector according to the invention.

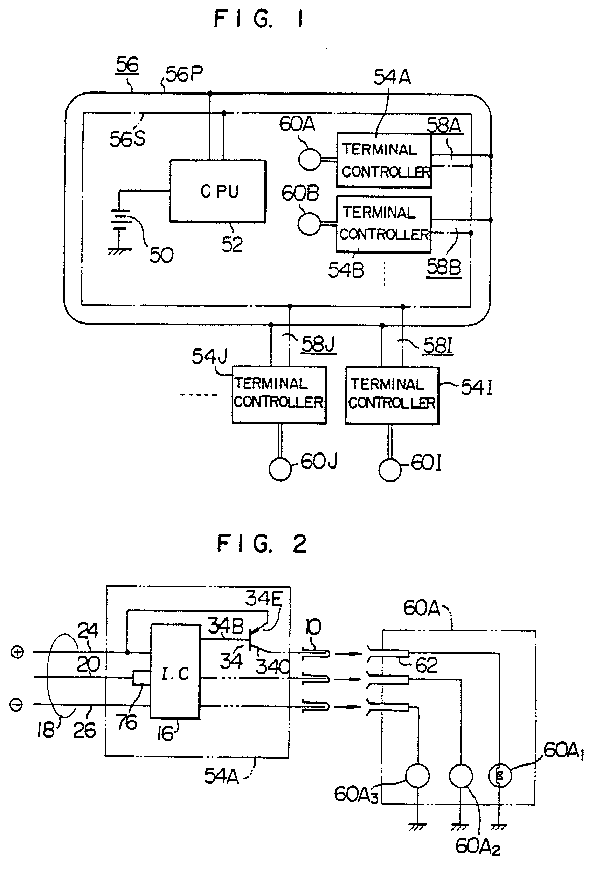

A centralized control system for automobiles is arranged such that the output signals from electrical devices such as switches operated by the driver and various sensors are encoded and then sent to a central processing unit (CPU), the CPU processes the encoded signals in a time division mode to generate necessary instruction codes, and the instruction codes are decoded and applied to corresponding electrical devices such as head lamps, tail lamps, a car air conditioner and a horn to actuate the electrical devices in accordance with the corresponding instruction codes. The electrical devices are divided into a number of groups, each including those electrical devices which are relatively in close to each other. In order to simplify the wiring, a terminal controller is provided for each group of the electrical devices to include integrally control circuit elements such as circuit elements for amplifying and/or encoding the output signals of associated electrical devices or decoding instruction codes to be supplied from the CPU to the electrical devices and driver control elements such as amplifiers for driving associated electrical devices to be driven by the decoded signals. Fig. 1 shows the layout of the multiplexed wiring used in such a centralized control system for vehicles. In Fig. 1, reference numeral 50 designates a power source, 52 a central processing unit (CPU), 60A, 60B, ..., 60I and 60J a plurality of groups of electrical device, each group including those electrical devices which are relatively in close to each other as mentioned above, and 54A, 54B, ..., 54I and 54J a plurality of terminal controllers each associated with the corresponding group of electrical devices and having the circuit elements of an integrated form. The above components are interconnected by a looped main cable 56 and branch cables 58A, 58B, ..., 58I and 58J branching from the main cable 56. The main cable consists of a power transmission path 56P including a pair of conductors, one of which is a grounded wire and may be omitted if the vehicle body is utilized for the ground wire, for supplying an electric power from the power source to the terminal controllers through the CPU and a signal transmission path 56S for signal transmission in the time division multiplex mode between the CPU and the terminal controllers. The signal transmission path 56S is made of a pair of electrical conductors, one of which is a grounded wire and may be omitted if the vehicle body is utilized for the ground wire, when the signal is transmitted in a form of electric energy or made of a single optical fiber when the signal is transmitted in a form of optical energy. The branch cables provide branches from the power and signal transmission paths to the respective components.

Assume now that one of the electrical devices in the group 60A stands for a manual switch for switching on or off a head lamp and another electrical device in the group 60B stands for the head lamp. When the manual switch is turned on, a signal generated thereby is encoded by a suitable circuit, which may be any well-known type, in the terminal controller 54A and sent to the CPU 52 through the branch cable 58A and main cable 56. Upon receiving the signal, the CPU generates an instruction code indicative of "Turn on the head lamp" and the instruction code is sent to the terminal controller 54B through the main cable 56 and branch cable 58B. This terminal controller 54B includes a decoder circuit which decodes the instruction code to generate an on-signal, and a driver circuit, for example, a driver transistor which is turned on by the on-signal to drive the head lamp. Thus, various control circuit elements in the terminal controller function to encode the signals generated from the associated electrical devices into given codes predetermined depending on the functions of the devices or to decode those instruction codes which are selected from the instruction codes sent from the CPU to be applied to the associated electrical devices. These control circuit elements having the above functions can readily be made by utilizing known IC or LSI technology.

Since a number of terminal controllers 54A, 54B, ... are used with the multiplexed wiring for automobiles, the system requires, as a whole, a considerably large space even though the size of each of the terminal controllers increases slightly. Accordingly, it is important in design of the multiplexed wiring to make each of the terminal controllers compact, but conventional technologies failed to give any complete solution to the above technical problem.

In addition, it is necessary to protect the wiring from the influence of electromagnetic noises derived from such as ignition device and horn. Conventionally, in order to avoid the influence of such electromagnetic noises, coaxial cables or shielded wires are used for the signal lines, or the terminal controllers are housed in respective steel casings. The conventional countermeasures for the electromagnetic noises generally require an increased space and an increased total weight, resulting in impairment of the advantage of the multiplexed wiring system. In other words, because of tendency to increase in size and weight of individual devices used in the multiplexed wiring system, as well as an increased number of such devices, it was generally difficult to satisfactorily achieve a compact configuration of the whole system.

A single connector is provided for each of a plurality of groups of electrical devices to mount therein an integrated terminal controller associated with the electrical devices of each group. The connector is further provided with means for connecting the terminal controller to the main cable and means for connecting the terminal controller to the electrical devices.

In this case, the terminal controller and terminals of the connector are preferably molded with resin to securely support them inside the connector housing.

When the terminal controller and the terminals are covered at their surfaces with an insulating material and thereafter they are molded with resin containing iron powders so as to be securely supported within the casing, it is possible to advantageously achieve, in addition to compact configuration of the terminal controller, sufficient dissipation of heat generated in the circuit elements such as transistors mounted therein and shielding effect for protecting the circuit elements from electromagnetic noises.

Further, use of an optical fiber as the signal transmission path of the main cable can preferably give an essential solution to the problem of the electromagnetic noises. Also, the connection of the terminal controller to the associated electrical device group can preferably be attained by a set of terminals removably connected to the electrical device group thereby to simplify the wiring of the system work. Of the circuit elements in the terminal controller, the control circuit elements for signal processing can preferably be integrated in one chip by using IC or LSI technology and simultaneously chips of circuit elements such as driver transistors for switching the supply of power to the electrical devices can preferably be fixed to suitable terminals to be connected to the corresponding electrical devices, thereby making the connector compact.

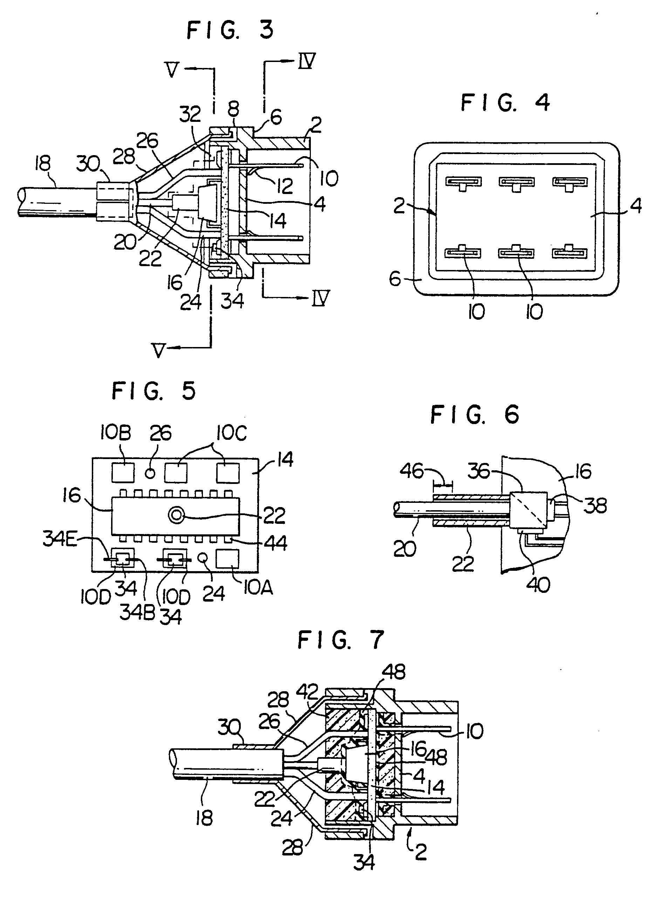

A connector of the above construction will be described with reference to Figs. 2 and 3. Fig. 2 illustrates a circuit arrangement of the terminal controller 54A integrated in the connector and the associated electrical device group 60A, and Fig. 3 illustrates an internal structure of the connector incorporated with the terminal controller 54A as shown in Fig. 2. The electrical device group 60A as shown in Fig. 2 includes an electrical device $60A_1$ exemplified as the head lamp, the other devices $60A_2$ and $60A_3$ not specified, and a set of sockets 62 respectively connected to the devices, $60A_1$, $60A_2$ and $60A_3$. On the other hand, the terminal controller 54A includes a circuit unit 16 comprised of an IC chip incorporated with circuit elements for decoding instruction codes to produce control signals for controlling the electrical device group and/or for encoding signals from the electrical device group, a driver transistor 34 driven by a signal from a suitable circuit element of the circuit unit so as to supply load current to the head lamp $60A_1$, and a converter unit 76 for converting a light signal from an optical fiber 20 into an electrical signal or an electrical signal from the circuit unit 16 into a light signal. Circuit elements for controlling load currents supplied to the electrical devices $60A_2$ and $60A_3$ are not illustrated for clarity in Fig. 2. A connecting cable 18 consisting of power conductors 24 and 26 constituting the power transmission path between the terminal controller 54A and the CPU and the optical fiber 20 serving as the signal transmission path extends from the terminal controller 54A for direct connection or indirect connection by way of a known connector to corresponding two power conductors and optical fiber included in the branch cable 58A. For connection of the electrical devices $60A_1$, $60A_2$ and $60A_3$ to the corresponding circuit elements of the terminal controller 54A, a set of removable terminals 10 and provided to be removably connected to the set of sockets 62. The terminal controller 54A and the set of terminals 10 are integrated in one connector as shown in Fig. 3. A housing 2 of connector as shown in Fig. 3 has an internal partition wall 4 and a plurality of terminals 10 project toward one side (righthand side in the illustrated example) of the partition wall 4. In the illustrated example, the number of the terminals 10 is six. Each of the terminals 10 extends rightwards passing through an opening formed in the partition wall 4 and a pawl 12 formed to the terminal prevents the terminal from being slipped out of the partition wall 4.

On the opposite side, namely, the lefthand side of the partition wall 4, there is provided a ceramic base plate 14 to which the set of terminals 10 are secured. Mounted to this substrate 14 are the circuit unit 16 incorporating the integrated circuit elements and insulated conductors 24 and 26 of the power transmission path which are molded with resin 32 such as epoxy resin so as to be securedly supported inside the housing 2. A transistor chip 34 constituting the driver transistor is also mounted to the ceramic base plate 14, and secured by the resin 32 covering thereon.

The optical fiber 20 held by a fiber support 22 is connected to the circuit unit 16. This optical fiber 20 stands for the signal transmission path of the main cable and transmits the signal from the CPU 52 to the circuit unit 16.

The optical fiber 20 and the insulated conductors 24 and 26 are bundled together by a cover to constitute the cable 18. This cable 18 is connected to the main cable 56 as shown in Fig. 1 directly or by means of a known connector.

A horn-shaped cable support 28 terminates in one end 30 of smaller diameter by which one end of the cable 18 is clamped and the other end of larger diameter is partly held in the housing 2. Specifically, in the illustrated example, portions of the larger-diameter end of the cable support 28 are neatly fitted in a support fixing bore 8 formed in a circumferential flange 6 of the housing 2. The support fixing bore 8 has, as shown in Fig. 3, an L-shaped section which is open to the circumferential surface of the flange 6 so that the tip of the support cable 28 inserted in the bore 8 can be bent as shown in Fig. 3 to prevent the cable support 28 from being separated from the housing 2.

The insulated conductors 24 and 26 are connected through the power transmission path of the main cable to positive and negative electrodes of the battery 50, respectively. The number of the terminals 10, six in the illustrated example, may be determined suitably depending on the design of the multiplexed wire.

Fig. 5 illustrates a front view of the ceramic base plate 14 of Fig. 3 as viewed from the left side. There are shown six terminals of which terminals 10A and 10B are connected to the positive and negative electrodes of the power source, and terminals 10C are connected to those terminals of the circuit unit 16 which are connected to circuit elements incorporated therein and associated with the corresponding electrical devices so that the terminals 10C receive signals through the circuit elements from the electrical devices. Further, two terminals 10D are respectively connected to the collector electrodes of transistors (one of which is the transistor 34 having a collector 34C). The transistor 34 has an emitter electrode 34E connected to the power source and a base electrode 34B connected to a terminal 44 connected to the corresponding circuit element of the circuit unit 16.

Also illustrated in Fig. 5 are ceramic base plate 14, fiber support 22 and insulated conductors 24 and 26 corresponding to those in Fig. 2.

In case where a single optical fiber is used as the signal transmission path, the CPU and respective circuit units each require a converter which converts the received light signal into an electrical signal suited for processing at the CPU or the circuit unit and another converter which converts the received electrical output signal into a light signal suited for transmission through the optical fiber. Such converters are provided at the connection between the optical fiber and the CPU or between the optical fiber and each circuit unit.

Fig. 6 shows the connection of the optical fiber 20 to the circuit unit 16.

A beam splitter 36 is embedded in the depth near the surface of the circuit unit 16 and one end of the optical fiber 20 is jointed to the surface of the splitter 36 to assure the light signal transmission. To assure stable connection of the optical fiber 20, a tubular fiber support 22 is fixed to the circuit unit 16 such that the optical fiber 20 is passed through the fiber support 22, and one end 46 of the fiber support 22 is calked about the optical fiber. An electro/photo converter 38 for converting the electrical output signal of the circuit unit 16 into a light signal is bonded to the opposite surface of the beam splitter 36, and a photoelectric converter 40 for converting the light signal sent from the CPU via the fiber 20 into an electrical signal is bonded to the side surface (lower side surface in Fig. 6) of the beam splitter 36. The light output signal of the electro/photo converter 38 is sent to the CPU through the optical fiber 20 and the electrical output signal of the photoelectric converter 40 is applied to the circuit unit 16. In this manner, the signal transmission and reception for the circuit unit 16 can be assured when the optical fiber is used as the multiplex signal transmission path.

As described above, since the circuit elements used for the electrical devices to be controlled are integrated inside the housing 2 of the connector connected to these electrical devices in the embodiment as explained with reference to Figs. 2 to 6, the overall construction of the multiplexed wiring system can be reduced greatly in its size and weight as compared with the conventional device in which separate connectors and terminal controllers are interconnected by cables. Also, since the circuit elements of the terminal controller are securely molded with resin 32 inside the housing of the connector, they are not exposed to moisture and dust, thereby providing the highly durable and reliable multiplexed wiring system. In addition, the optical fiber 20 used as the signal transmission path of the main cable completely eliminates the influence of electromagnetic noises, due to, for example, the ignition circuit or horn, upon the signal transmission path, thus eliminating the necessity of covering the signal transmission path with an electromagnetic shielding wire or the like.

Fig. 7 illustrates another embodiment of the internal structure of a connector used for the multiplexed wiring system for vehicles according to the invention.

In Fig. 7, portions of the circuit unit 16 and the terminals which are inside of the housing are covered with an insulating material 48 and thereafter an iron powder containing resin 42 is filled to embed then therein so that the circuit unit and the terminals can be supported securely within the housing 2 of the connector. The circuit unit 16 and terminals 10 are housed on the lefthand side of the ceramic base plate 14 in the housing 2 and securely supported as in Fig. 3. The remaining members in Fig. 7 which are substantially the same as those in the embodiment as explained with reference to Figs. 2 to 6. and designated by like reference numerals are not described further more.

In the embodiment of Fig. 7, the circuit unit 16 and terminals inside the connector are covered with an iron powder containing resin for electromagnetic shielding and they can be immune from the electromagnetic noises due to the ignition circuit and horn. In addition, the driver transistor 34 fixed to the ceramic substrate 14 is also covered with the iron powder containing resin, thus enhancing dissipation of heat generated in the transistor.

As in the embodiment of Figs. 2 to 6, since the circuit unit 16 is housed in the housing 2 of the connector and made integral with the connector, the embodiment of Fig. 7 can afford to provide a compact and easy-to-handle multiplexed wiring for automobiles. Further, the circuit unit 16 can be protected by the housing 2 of the connector from moisture and dust to enhance durability and reliability of the wiring. Furthermore, the optical fiber 20 used as the signal transmission path eliminates the influence of electromagnetic noises upon the signal line to assure an accurate operation of the electrical devices associated with the multiplexed wiring.

**Claims**

1. A wiring for use with a vehicle to establish multiplex communication between a central processing unit (52) and various electrical devices (60A, 60B, ..., 60J) located at different portions of the vehicle through control or driver circuit elements (54A, 54B, ..., 54J) respectively associated with the said electrical devices, comprising
a signal transmission path (56S) comprising electrical conductors (24, 26) and optical fibers (20) for transmission of signals, in a multiplex mode, to be sent from or applied to the central processing unit (52),

a power transmission path (56P) for transmission of power to be fed from a power source (50) wherein said signal transmission path (56S) and said power transmission path (56P) are included within a main cable (56) and

connecting means (58A, 58B, ..., 58J) lodged in housings for connecting the several electrical devices (60A, 60B, ..., 60J) to the signal transmission path (56S) and to the power transmission path (56P) through the respective control or driver circuit elements (54A, 54B, ..., 54J), characterized in that

the connecting means (58A, 58B, ..., 58J) each comprise one single housing (2) surrounding as well the respective control as the driver circuit elements (16, 34), said circuit elements (16, 34) consist of a circuit unit (16) comprised of an IC-chip incorporated for decoding instruction codes to produce control signals for controlling said various electrical devices and/or for encoding signals from said electrical devices, driver transistors (34) each driven by a respective signal from a suitable circuit element of the circuit unit so as to supply a load current to a certain of said electrical devices and a converter unit (76) for converting a light signal from an optical fiber (20) into an electrical signal or an electrical signal from the circuit unit (16) into a light signal.

2. The wiring of claim 1, characterized in that the housing (2) includes a ceramic base plate (14) fixedly molded therein by a resin material and having the terminals (10) and the control and driver circuit elements (16, 34) fixed thereto.

3. The wiring of claim 2, characterized in that the resin material contains iron powers.

**Patentansprüche**

1. Verdrahtungseinrichtung zur Verwendung in einem Fahrzeug zur Multiplexkommunikation zwischen einer Zentraleinheit (52) und verschiedenen elektrischen Einrichtungen (60A, 60B, ..., 60J), die an verschiedenen Stellen des Fahrzeugs positioniert sind, über Steuer- oder Treiberschaltungselemente (54A, 54B,..., 54J), die den elektrischen Einrichtungen jeweils zugeordnet sind, umfassend:

einen Signalübertragungsweg (56S) mit elektrischen Leitern (24, 26) und Lichtleitfasern (20) zur Übertragung von Signalen im Multiplexbetrieb, die von der Zentraleinheit (52) zu senden oder dieser zuzuführen sind,

einen Leistungsübertragungsweg (56P) zur Übertragung von von einer Stromversorgung (50) zuzuführender Leistung, wobei der Signalübertragungsweg (56S) und der Leistungsübertragungsweg (56P) in einem Hauptkabel (56) enthalten sind, und

Anschlußeinrichtungen (58A, 58B, ..., 58J), die in Gehäusen angeordnet sind und die verschiedenen elektrischen Einrichtungen (60A, 60B, ..., 60J) an den Signalübertragungsweg (56S) und den Leistungsübertragungsweg (56P) über die jeweiligen Steuer- oder Treiberschaltungselemente (54A, 54B, ..., 54J) anschließen, dadurch gekennzeichnet,

daß die Anschlußeinrichtungen (58A, 58B, ..., 58J) jeweils ein einziges Gehäuse (2) umfassen, das sowohl die jeweiligen Steuer- als auch die Treiberschaltungselemente (16, 34) umgibt, wobei die Schaltungselemente (16, 34) bestehen aus: einer Schaltungseinheit (16) mit einem IC-Chip, der zur Decodierung von Befehlscodes dient und Steuersignale zur Steuerung der verschiedenen elektrischen Einrichtungen erzeugt und/oder zur Codierung von Signalen von den elektrischen Einrichtungen dient, Treibertransistoren (34), die jeweils von einem Signal eines geeigneten Schaltungselements der Schaltungseinheit angesteuert werden zur Zuführung eines Laststroms zu einer bestimmten elektrischen Einrichtung, und einer Umwandlungseinheit (76) zur Umwandlung eines Lichtsignals von einer Lichtleitfaser (20) in ein elektrisches Signal oder eines elektrischen Signals von der Schaltungseinheit (16) in ein Lichtsignal.

2. Verdrahtungseinrichtung nach Anspruch 1, dadurch gekennzeichnet, daß das Gehäuse (2) eine mit Harzmaterial fest eingeformte Keramikgrundplatte (14) aufweist, an der die Anschlüsse (10) und die Steuer- und Treiberschaltungselemente (16, 34) befestigt sind.

3. Verdrahtungseinrichtung nach Anspruch 2, dadurch gekennzeichnet, daß das Harzmaterial Eisenpulver enthält.

**Revendications**

1. Câblage destiné à être utilisé avec un véhicule de manière à établir une communication en multiplex entre une unité centrale de traitement (52) et différents dispositifs électriques (60A, 60B, ..., 60J) situés dans différentes parties du véhicule, par l'intermédiaire d'éléments de commande ou d'éléments de circuit formant étages d'attaque (54A, 54B, ..., 54J) associés respectivement auxdits dispositifs électriques, comprenant

une voie (56S) de transmission des signaux, comprenant des conducteurs électriques (24, 26) et des fibres optiques (20) pour la transmission, selon un mode en multiplex, de signaux devant être envoyés par ou être appliqués à l'unité centrale de traitement (52),

un trajet (56B) de transmission de l'énergie, servant à transmettre l'énergie devant être délivrée par une source d'énergie (50), ladite voie (56S) de transmission des signaux et ladite voie (56P) de transmission de l'énergie étant contenues dans un câble principal (56), et

des moyens de raccordement (58A, 58B, ..., 58J) logés dans des boîtiers pour le raccordement des différents dispositifs électriques (60A, 60B, ..., 60J) à la voie (56S) de transmission des signaux et à la voie (56P) de transmission de l'énergie, par l'intermédiaire des éléments de commande ou des éléments de circuit formant étages d'attaque respectifs (54A, 54B, ..., 54J), caractérisé en ce que

les moyens de raccordement (58A, 58B, ..., 58J) comportent chacun un seul boîtier (2) entourant aussi bien les éléments de commande respectifs que les éléments de circuit formant étages d'attaque (16, 34), lesdits éléments de circuit (16, 34) étant formés par une unité de circuit (16) constituée par une microplaquette à circuits intégrés incorporée pour décoder des codes d'instruction de manière à produire des signaux de commande pour commander lesdits différents dispositifs électriques et/ou coder les signaux provenant desdits dispositifs électriques, des transistors formant étages d'attaque (34), pilotés chacun par un signal respectif provenant d'un élément de circuit approprié de l'unité de circuit de manière à envoyer un courant de charge à un certain dispositif faisant partie desdits dispositifs électriques et une unité formant convertisseur (76) servant à convertir un signal lumineux provenant d'une fibre optique (20) en un signal électrique, ou un signal électrique provenant de l'unité de circuit (16) en un signal lumineux.

2. Câblage selon la revendication 1, caractérisé en ce que le boîtier (2) comporte une plaque de base céramique (14) moulée à demeure à l'intérieur du boîtier au moyen d'un matériau formé de résine et à laquelle sont fixés les bornes (10) et les éléments de commande et les éléments de circuit formant étages d'attaque (16, 34).

3. Câblage selon la revendication 2, caractérisé en ce que le matériau formé de résine contient des poudres de fer.

FIG. 1

FIG. 2

1

FIG. 3

FIG. 4

FIG. 5

FIG. 6

FIG. 7